(19) Europäisches Patentamt

European Patent Office

Office européen des brevets

(11) **EP 1 072 988 A2**

(12) **EUROPEAN PATENT APPLICATION**

(43) Date of publication:
**31.01.2001 Bulletin 2001/05**

(51) Int. Cl.[7]: **G06F 17/60**

(21) Application number: **00114956.6**

(22) Date of filing: **19.07.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **22.07.1999 US 145012**

(71) Applicant: **VisonCompass, Inc.**
**Seattle, Washington 98121 (US)**

(72) Inventor: **Raju, Ramalinga B.**
**Andhra Pradesh (IN)**

(74) Representative:
**Schwepfinger, Karl-Heinz, Dipl.-Ing.**
**Prinz & Partner GbR**
**Manzingerweg 7**
**81241 München (DE)**

(54) **Quantitative business performance analysis**

(57) A method for quantifying business concerns. Each business concern is identified as an Aspect. Each Aspect is given attributes in the form of tags, to which values of desired performance are assigned. Once the Aspects and values are defined, the performance to the desired values can be monitored and managed. An indicator for overall compliance to these Aspects is also provided.

**FIG. 1**

EP 1 072 988 A2

**Description**

**BACKGROUND**

1. Field

This disclosure relates to business management methods, more particularly to methods used to quantify business concerns.

2. Background

Business management methods have undergone several evolutions since the dawn of the Industrial Revolution. Some methods become entrenched in organizations because of their simplicity and ease of use, while others fall by the wayside because of impracticality and irrelevance to business concerns.

A main problem of business management is the lack of objective communication and monitoring systems. Some progress has been made in this area. Most notable, Management By Objectives by Peter Drucker, and One Page Management, by Riaz Khadem and Robert Lorber, have contributed to solutions to these problems. However, these did not result in a comprehensive and coherent structures being developed to meet all eventualities.

Recently, Robert S. Kaplan and David P. Norton have attempted to relate strategy with operations through appropriate measurements. This approach is called the Balanced Scorecard. However, some shortfalls of the Balanced Scorecard are that it stresses on the fact that all organizational 'concerns' can be made into measures, which can be 'de-aggregated' across all levels, which may not be possible in every organization. Also there is another criticism that BSC doesn't bestow the responsibility for every individual measures' performances.

Therefore, a need exists for a coherent system to capture business concerns and decisions.

**SUMMARY**

One of the characteristics of the invention is a method for quantifying business concerns. Each business concern is identified as an Aspect. Each Aspect is given attributes in the form of tags, to which values of desired performance are assigned. Once the Aspects and values are defined, the performance to the desired values can be monitored and managed.

Another facet of the invention is a performance indicator ('Management Effectiveness Index') that quantifies performance with respect to organizational aspirations as well as quantifying the importance of various Aspects.

Another feature of the invention is a software program that can be used to implement the methods of the invention.

**BRIEF DESCRIPTION OF THE DRAWINGS**

The invention may be best understood by reading the disclosure with reference to the drawings, wherein:

Figure 1 shows a flowchart of one embodiment of a method for numeric management, in accordance with the invention.
Figure 2 shows a block diagram of an example of quantifying business concerns, in accordance with the invention.
Figure 3 shows a table representative of business scenario quantified in accordance with the invention.

**DETAILED DESCRIPTION OF THE EMBODIMENTS**

Management systems have attempted to relate strategy with operations through appropriate measurements. The Balanced Scorecard approach previously mentioned has made some strides in this area, but gaps still exist in monitoring and implementing objectives to coverall eventualities. This disclosure discusses a new approach and implementation of a business management system, referred to as Numeric Management.

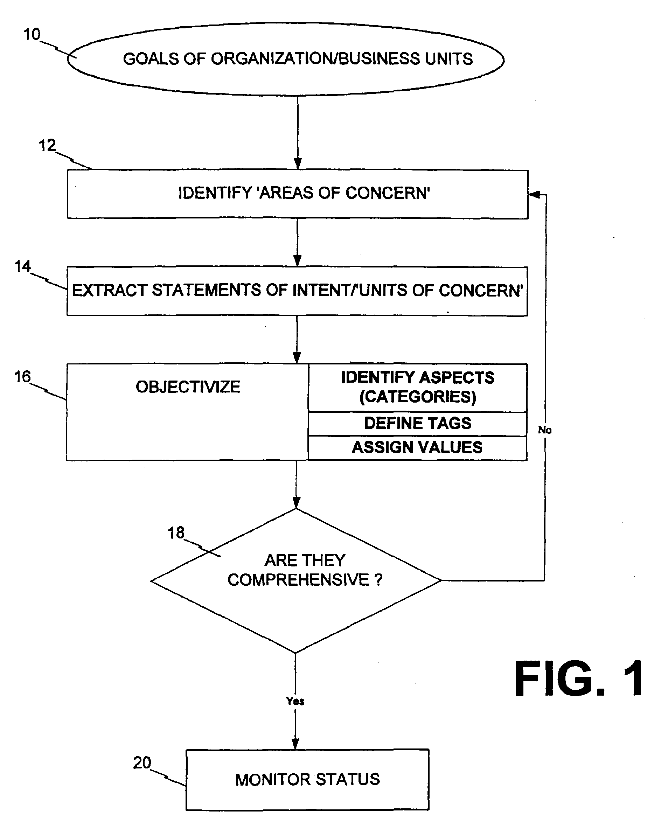

Figure 1 shows a flowchart of one embodiment of the invention. At 10, the goals of the organization and business units are determined. In order to achieve the best results possible with NM, the definition of these goals should reach down to the smallest organizational level. Once the goals of the organizations are determined, 'areas of concern' within them are identified at 12. These areas of concern are converted into a 'statement of intent' at 14, with identified 'units of concern.'

For example, an area of concern in an organization may be "I am concerned about the turn-over of employees in our company possibly being too high." This must be converted into a statement of intent. The concern is employee turn-over. However, more precision is needed to replace the term 'too high,' as well as a need for some sort of time frame. At 14, the general concern would then be expressed as "Employee turn-over should be no more than 2 percent per quarter."

At 16, this statement of intent is used as the basis for structuring a trackable concern unit, referred to here as an 'Aspect.' The statement of intent is phrased objectively and precisely. This is done using 'Aspects,' 'Tags' and then assigning values to the Tags.

Business concerns are expressed as a number of categories such as raw material inventory, product sales, and return on equity, etc. A category repeating itself, such as in space or time, will be referred to here as a recurrence. Recurrences are expressed numerically. Every business concern may be viewed as having a recurrence behind it.

An Aspect is the smallest unit of business concern. For example, an accounting system typically has transactions as the smallest unit. An inventory system will have Parts or amounts of raw materials as the smallest unit and Project Management systems have 'activities' as the smallest unit. One facet of the invention is that it defines a unit of business concern, a concomitant occurrence of a Category and Recurrence, as a universal unit that can be monitored, tracked and managed across all organizational lines. Application of the invention may establish interrelationships between different concerns, as well as 'concerns' themselves and 'recurrences' to provide objectivity in management. Additionally, although the term 'recurrence' is used, as will be discussed further, some of these units are actually non-recurring.

Aspects can be generated in several ways, but typically arise from a manager identifying an area of concern in that manager's business or unit as shown in the example above. Once the concern is identified, it must be quantified. The quantities to be attached to that Aspect are structured as attributes.

Tags house certain attributes of the Aspect and convert a statement of general concern into a trackable, objective statement. Once the attributes to be associated with a Tag are defined, a value for each attribute must be determined and assigned at 16.

The results of the structuring performed at 16 must be checked to ensure that the Aspect, Tag and Values are not only correct but comprehensive. If the analysis shows the defined structures failing to cover a goal or objective of the organization, the process must be repeated. After the process is performed to encompass all areas of concern, actual results versus the desired results can be monitored and managed at 16.

The values assigned can be such items as the desired result (Norm), the actual result, the unit of measurement (UOM), the preferred direction and the status of the actual as compared to the desired. The instances of UoM can also have binary meaning, such as a task that is either performed or not performed during a periodic check.

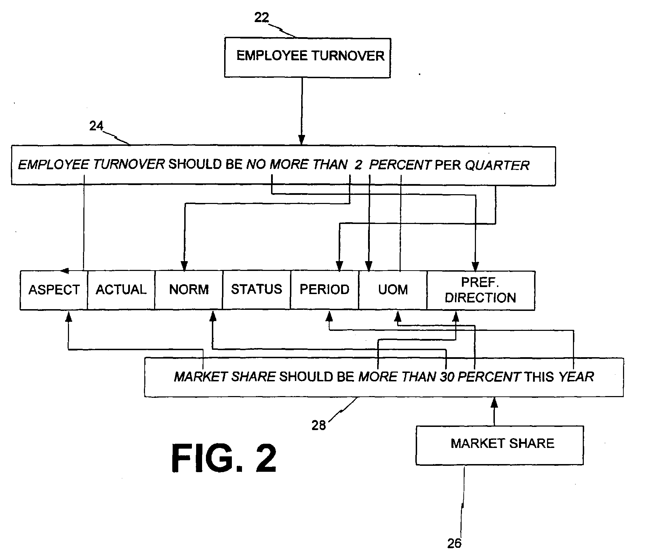

Figure 2 shows a block diagram of two business concerns being quantified into Aspects with the appropriate tags. The format of this particular Aspect has the tags of actual, norm, status, period, unit of measurement (UOM) and preferred direction. As will be discussed further, several other tags are available to further provide attributes of the Aspect.

A first example is given with the concern of 'employee turnover' at 20. Once this concern is quantified into a statement, it can be translated into an Aspect. In this example, the quantified statement of employee turnover is "Employee Turnover should be no more than 2 percent per quarter." This can now be parsed or formatted into an objective structure; The Aspect is employee turnover. The norm, or desired value, is 2 and the UOM is percent. The preferred direction is no more than, which will translate into "less than or equal to." The period to be monitored is quarterly. It must be noted that values for the tags actual and status are not assigned. Actual values will have to be determined from whatever data is available on employee turnovers. The status will result from the comparison of actual to the norm and will typically be expressed as 'Green', comparing favorably to the norm, or 'Red', comparing unfavorable to the norm.

A second example is given at 24 for the business concern of market share. The statement at 26 is then quantified into the objective structure. The Aspect is market share, the norm is thirty. The UOM is percentage. The preferred direction of more than translates into 'greater than or equal to.' The period is yearly.

In this manner, general business concerns with some desired measure can be quantified into a clear and objective statement of intent. The statement of intent provides the desired measure, referred to as a target or a norm and monitors performance of the actual against the desired.

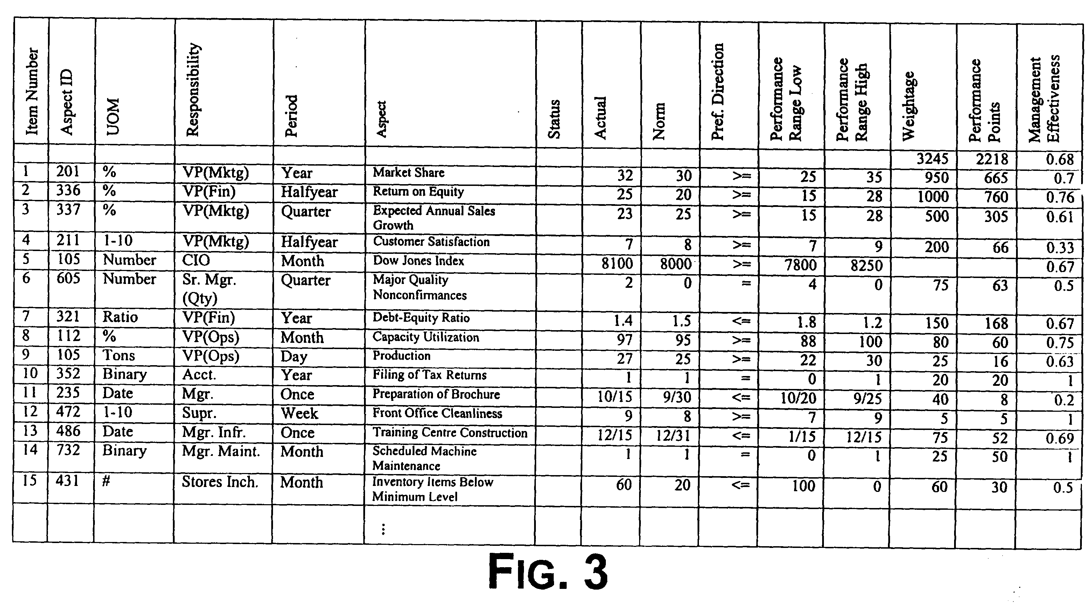

While the method of the invention is only shown in two examples in Figure 2, further application is possible. As can be seen by Figure 3, the method can be applied at all levels of the organization. In addition, the application of the invention is intended as a framework and is not restricted to any particular application.

Referring to item 1 in Figure 3, it can be seen that this is an Aspect of strategic importance and is in control of a vice president. However, the method of the invention can be applied to more specific tasks, such as item 10, which is under control of a staff account. As numeric management proliferates into an organization, hundreds of thousands of Aspects could be generated. At the same time, however, it is not necessary for any one person to be responsible for more than twenty or thirty.

A further advantage of the invention is the ability to clearly and objectively communicate the expectations and goals of the organization for every type of recurrence. For example, item 12 in Figure 3 is not typically handled in a coherent manner. When this concern is captured and placed into the Aspect, there is no longer any room for misunderstanding and the responsible employee knows exactly what is expected.

In addition to monitoring and communicating internal Aspects, Aspects normally not considered part of a management system could be monitored for their impact on the organization. For example, item number 5, the Dow Jones Index, can be tracked for its impact on the organization. Other examples include such things as 'inflation,' or for agricultural concerns 'rainfall.' These are not under control of the organization but may affect other Aspects.

Other advantages of the invention include its ability to combine all types of factors from all kinds of industries and businesses into one framework. Both tangibles and intangibles can be fit into the framework and tracked and monitored. The method is simple and allows all kinds of business concerns regardless of their status as tangible or intangible, recurrent or non-recurrent, current or future. There is no limitation on applicability of the invention, because of the flexible nature of Aspects and tags. New Aspects can be added, old ones deleted, new tags added to existing Aspects, or old ones removed. In addition, the number of tags assigned to a particular Aspect has no constraint.

However, some effects of the structure of the tags should be considered. The higher the number of tags introduced the greater effort required to set up the system. The maintenance of such a system requires only marginal effort. Some values assigned to the tags may never change, requiring little or no updating. Others will change infrequently. Much of the ongoing effort will be to locate and determine the actual values for each Aspect. Therefore, the selection of tags for each Aspect is left to the system designer.

In Figure 3, several additional examples of tags can be seen. The 'responsibility' tag provides the name or role of the responsible person for achieving the norm. The 'weightage' tag indicates the importance assigned to that Aspect. This can be assigned within a business unit or corporate wide.

Other possible tags include, but are not limited to, those shown with their accompanying definition in the below table.

| Tag | Definition |
| --- | --- |
| Action | Points toward solutions those need to be done, by highlighting hidden causes or lack of resources |
| Information | Location of repository of all information relevant to that Aspect |
| Resources | Resources upon which performance of that Aspect depends |
| Performance Ranges | The range within which the actual can swing, usually designated as a Low and High |
| Internal Audit | Indicates periodicity of internal audit checks of that Aspect |
| Confidentiality | Controls access privileges to that Aspect |
| • • • | |

However, this list is only intended to be an example and no restriction of the invention is intended by it.

Also seen in Figure 3 are three tags with more complicated definitions. Weightage refers to the importance of that Aspect to the organization. The organization may be the corporation, or an individual business unit within the organization. Typically importance will be assigned by resource absorption by the Aspect to produce normal performance or the value addition that the Aspect can bring about at normal performance. For the purposes of this discussion, only the resource absorption of the Aspect for normal performance for the period will be used.

For example, an Aspect of customer calls would require a number of salesmen, devoted for an amount of time and incur a specified expenditure. In order to assign a weightage, this would be compared to one of the highest-ranking Aspects and a scale determined to rank them. A high-ranking Aspect may be production, because it absorbs a number of resources, including machinery use, raw material and human resources. If production over its specified period of one day costs one million dollars ($1,000,000) and the customer calls cost nine thousand dollars ($9000) over their specified period of one month production would be given a weightage of 1000 and customer calls a 9. This example assumes a scale of 1 to 1000.

The weights interact with another important feature of application of the invention, the management effectiveness factor (MEF). In this method, one can look at the MEF and conclude how effectively the business has function against its aspirations. The MEF can be calculated on several different levels, including one for each Aspect, one for each functional area, specified periods, groups of Aspects, overall organization, etc.

The MEF for an individual Aspect is calculated as follows:

*MEF (Individual Aspect) = (Actual - PR Low)/(PR High - PR Low), where PR is Performance Range.*

The $_{Performance\ Points}$ are used to calculate the MEF for groups of Aspects, such as the Aspects for a given period, etc., as follows:

$$MEF_{GROUP} = \text{Cumulative}\ (_{Performance\ Points}) / \text{Cumulative (Weights)}$$

Where $_{Performance\ Pts.}$ for Aspects are derived by multiplying MEF (Ind. Aspect) with the Weight of the Aspect. The cumulative values refer to the summation of all of the values for the Aspects in the group.

One of the uses of cumulative values is in interrelated Aspects. An advantage of the invention is that interrelationships between Aspects can be accounted for and used for a more precise picture of the organization's past and projected performance. Interrelationships can be classified as Structural and Process relationships.

Structural relationships are in the nature of a tree structure. For example, the below set of Aspects is interrelated in this manner.

| Aspect ID | Aspect | Actual |
|---|---|---|
| AAA | Sales | 830 |
| AAA.1 | Sales-Region I | 550 |
| AAA.2 | Sales - Region II | 280 |
| AAAA.1.1 | Sales - Rep X | 300 |
| AAA.1.2 | Sales - Rep Y | 160 |
| AAA.1.3 | Sales - Others | 90 |
| • • • | | |

In this type of interrelationship, the cumulative sales for the entire organization are 830, 550 from Region I and 280 from Region II. The 550 in sales figure for Region I is then divided up among the sales reps in that region.

Another form of Aspects' relationship in organizations is a Process relationship, where the links of a cause-effect chain are connected via Aspects. This can be indicative of the flow of work in an organization.

Examples of such process related Aspects are shown below.

| Aspect ID | Aspect | Norm (days) |
|---|---|---|
| CCC | Raw Material Order Placement | 15 |
| CCC.1 | Requirements assessment | 3 |
| CCC.2 | Call for quotes | 10 |
| CCC.3 | Negation and finalization | 2 |

The definition of these Aspects must be done with care to ensure that the actual links are documented in the structure of the system. However, this additional flexibility of the method of the invention allows for more precise analysis and correlation between performances across all organizational lines. It brings hidden recurrences to the surface for better management and understanding of the effects of these on business concerns. As mentioned before, the more detailed information input into the system, the better and more precise view of the organization will result.

The level of detail attainable by this system and the numeric nature of the recurrences lend the system to implementation as a software tool. Several other management approaches, including the Balanced Scorecard, Total Quality Management, etc., have been implemented using software packages. This has several advantages in proliferating the method of the invention into an organization, as well as in the ability of computers to efficiently gather the actual values needed to monitor performance.

In addition, most organizations have computer systems in place to gather these actual values, although they do not put them to the same use as the method of the invention. It would seem advantageous to have another software program interact with these existing systems to acquire the actuals. Such a software implementation would be embodied on some form of computer readable medium, either as a downloadable file or from a diskette or CD-ROM.

Thus, although there has been described to this point a particular embodiment for a method and apparatus for numeric management of business concerns, it is not intended that such specific references be considered as limitations upon the scope of this invention except in-so-far as set forth in the following claims.

**Claims**

1. A method of quantifying business concerns, the method comprising:

   a) identifying Aspects corresponding to business concerns;
   b) defining at least one tag, wherein the tag contains an attribute of an Aspects;
   c) assigning values to each tag, wherein the values are usable for quantifying the business concerns and indicating compliance with goals related to those business concerns.

2. The method of claim 1, wherein the method further comprises allocating weights to each of the Aspects.

3. The method of claim 2, wherein the weight assignment is made dependent upon resource absorption.

4. The method of claim 2, wherein the weight assignment is made dependent upon value addition.

5. The method of claim 1, wherein the Aspects include recurring Aspects.

6. The method of claim 1, wherein the Aspects include non-recurring Aspects.

7. The method of claim 1, wherein the tag is one of the group comprised of: actual, norm, status, period, unit of measurement, preferred direction and responsibility.

8. A computer-readable medium, said medium containing software code, comprising:

   a) code operable to allow the user to define Aspects corresponding to business concerns;
   b) code operable to allow the user to define at least one tag for each Aspect; and
   c) code operable to allow the user to assign a value to a tag;

9. A method of determining a performance indicator, the method comprising:

   a) determining the difference between an actual performance value and a predetermined low bound of the performance value to produce a first value;
   b) determining the difference between the predetermined high bound and a predetermined low bound of the performance value to produce a second value;
   c) dividing the first value by the second value to produce a first performance indicator; and
   d) multiplying the first performance indicator by a value representing an importance of the Aspect to produce a second performance indicator and
   e) dividing the cumulative of second performance indicator by cumulative of importance to produce third overall performance indicator.

10 — GOALS OF ORGANIZATION/BUSINESS UNITS

12 — IDENTIFY 'AREAS OF CONCERN'

14 — EXTRACT STATEMENTS OF INTENT/'UNITS OF CONCERN'

16 — OBJECTIVIZE

| IDENTIFY ASPECTS (CATEGORIES) |
| DEFINE TAGS |
| ASSIGN VALUES |

18 — ARE THEY COMPREHENSIVE ?

No

Yes

20 — MONITOR STATUS

# FIG. 1

22

EMPLOYEE TURNOVER

24

EMPLOYEE TURNOVER SHOULD BE NO MORE THAN 2 PERCENT PER QUARTER

| ASPECT | ACTUAL | NORM | STATUS | PERIOD | UOM | PREF. DIRECTION |

MARKET SHARE SHOULD BE MORE THAN 30 PERCENT THIS YEAR

28

# FIG. 2

MARKET SHARE

26

| Item Number | Aspect ID | UOM | Responsibility | Period | Aspect | Status | Actual | Norm | Pref. Direction | Performance Range Low | Performance Range High | Weightage | Performance Points | Management Effectiveness |
|---|---|---|---|---|---|---|---|---|---|---|---|---|---|---|
| | | | | | | | | | | | | 3245 | 2218 | 0.68 |
| 1 | 201 | % | VP(Mktg) | Year | Market Share | | 32 | 30 | >= | 25 | 35 | 950 | 665 | 0.7 |
| 2 | 336 | % | VP(Fin) | Halfyear | Return on Equity | | 25 | 20 | >= | 15 | 28 | 1000 | 760 | 0.76 |
| 3 | 337 | % | VP(Mktg) | Quarter | Expected Annual Sales Growth | | 23 | 25 | >= | 15 | 28 | 500 | 305 | 0.61 |
| 4 | 211 | 1-10 | VP(Mktg) | Halfyear | Customer Satisfaction | | 7 | 8 | >= | 7 | 9 | 200 | 66 | 0.33 |
| 5 | 105 | Number | CIO | Month | Dow Jones Index | | 8100 | 8000 | >= | 7800 | 8250 | | | 0.67 |
| 6 | 605 | Number | Sr. Mgr. (Qty) | Quarter | Major Quality Nonconfirmances | | 2 | 0 | = | 4 | 0 | 75 | 63 | 0.5 |
| 7 | 321 | Ratio | VP(Fin) | Year | Debt-Equity Ratio | | 1.4 | 1.5 | <= | 1.8 | 1.2 | 150 | 168 | 0.67 |
| 8 | 112 | % | VP(Ops) | Month | Capacity Utilization | | 97 | 95 | >= | 88 | 100 | 80 | 60 | 0.75 |
| 9 | 105 | Tons | VP(Ops) | Day | Production | | 27 | 25 | >= | 22 | 30 | 25 | 16 | 0.63 |
| 10 | 352 | Binary | Acct. | Year | Filing of Tax Returns | | 1 | 1 | = | 0 | 1 | 20 | 20 | 1 |
| 11 | 235 | Date | Mgr. | Once | Preparation of Brochure | | 10/15 | 9/30 | <= | 10/20 | 9/25 | 40 | 8 | 0.2 |
| 12 | 472 | 1-10 | Supr. | Week | Front Office Cleanliness | | 9 | 8 | >= | 7 | 9 | 5 | 5 | 1 |
| 13 | 486 | Date | Mgr. Infr. | Once | Training Centre Construction | | 12/15 | 12/31 | <= | 1/15 | 12/15 | 75 | 52 | 0.69 |
| 14 | 732 | Binary | Mgr. Maint. | Month | Scheduled Machine Maintenance | | 1 | 1 | = | 0 | 1 | 25 | 50 | 1 |
| 15 | 431 | # | Stores Inch. | Month | Inventory Items Below Minimum Level | | 60 | 20 | <= | 100 | 0 | 60 | 30 | 0.5 |
| | | | | | ⋮ | | | | | | | | | |

**FIG. 3**

EP 1 072 988 A2